# EUROPÄISCHE PATENTSCHRIFT

(11) **EP 0 671 259 B1**
(45) Veröffentlichungstag und Bekanntmachung des Hinweises auf die Patenterteilung: **27.09.2000**
(21) Anmeldenummer: 95101544.5
(22) Anmeldetag: 06.02.1995
(51) Int. Cl.: B32B 27/20, C08J 5/04, C08L 23/02, C08L 97/02

(54) **Mehrschichtplatte oder Körper mit einem Kern, der Naturfasern enthält und Verfahren zu deren Herstellung**
Multilayer composite panel or article with a core comprising natural fibers and method for its manufacture
Panneau composite multicouche ou corps avec une âme contenant des fibres naturelles ainsi que procédé pour sa fabrication

(30) Priorität: 09.02.1994 DE 4403977; 08.08.1994 US 287197
(43) Veröffentlichungstag der Anmeldung: 13.09.1995
(73) Patentinhaber: R+S Technik GmbH, 63073 Offenbach (DE)
(72) Erfinder: Spengler, Ernst, D-63150 Heusenstamm (DE); Spengler, Gerhard, D-60388 Frankfurt 60 (DE)
(74) Vertreter: Schieferdecker, Lutz, Dipl.-Ing.

(56) Entgegenhaltungen:
- EP-A- 0 013 089
- EP-A- 0 037 907
- EP-A- 0 319 589
- EP-A- 0 589 193
- US-A- 4 291 084
- US-A- 5 019 197
- MODERN PLASTICS INTERNATIONAL, März 1993 Seite 32 P. MAPLESTON 'Natural fibers provide new source of fillers, reinforcements'
- PLASTICS ENGINEERING, April 1995 Seiten 27 - 28 A.R.SANADI 'Reinforcing Polypropylene with Natural Fibers'
- KUNSTSTOFFE, Bd.84, Nr.11, November 1994, MUNCHEN DE Seiten 1579 - 1581 B.WUTTKE 'Jutefaserverstärktes Polypropylen - eine Alternative zur Glasfaserverstärkung?'
- KUNSTSTOFFE, Bd.85, Nr.3, März 1995, MUNCHEN DE Seiten 366 - 370 K.-P.MIECK 'Flachs versus Glas: Flachsmattenverstärkte Thermoplaste (FMT) - eine Alternative zur Glasmattenverstärkung?'
- KUNSTSTOFFE, Bd.85, Nr.3, März 1995, MUNCHEN DE Seiten 319 - 321 TH.SCHLÖSSER 'Fahrzeugbau und Ökologie: Naturfaserverstärkte Kunststoffbauteile im Fahrzeug-Innenbereich'
- MODERN PLASTICS INTERNATIONAL, Mai 1994 Seite 69 BASF 'Natural fiber-reinforced composites are light and strong'

## Beschreibung

Die Erfindung bezieht sich auf einen Mehrschichtkörper aus Kunststoff und Naturfasern mit einer Unterschicht als Träger für eine Außenschicht, wobei die Unterschicht einen Füllstoff aus Naturfasern und ein Bindemittel aus thermoplastischem Kunststoff enthält.

Ein derartiger Mehrschichtkörper, der plattenförmig oder dreidimensional geformt sein kann, ist aus der EP-A-0 037 907 bekannt. Dort bildet der Mehrschichtkörper ein Formteil für die Innenausstattung von Fahrzeugen. Die Unterschicht besteht aus Polypropylen mit Füllstoffen, wobei als Füllstoff u.a. Holzmehl vorgesehen ist, also ein Naturprodukt mit einer Pflanzenfaserbasis. Außer den verstärkenden Füllstoffen enthält die Unterschicht auch ein kautschukartiges Mischpolymerisat. Diese Unterschicht ist über eine Kleberschicht mit einer außenseitigen und daher sichtbaren Oberflächenschicht verbunden, bei der es sich um eine Folienschicht oder eine Textilschicht handeln kann.

Aus der älteren, nachveröffentlichten EP-A-0 589 193 ist ein flächiger Verbundwerkstoff bekannt, der Naturfasermatten aus Flachsfasern in einer Polyolefinmatrix, insbesondere einer Polypropylenmatrix, aufweist. Die Flachsfasermatten können in untergeordneten Mengen auch anderere Fasern z.B. aus Glas, Jute, Sisal oder Baumwolle enthalten. Dieser Verbundwerkstoff ist ebenfalls zur Herstellung von Formteilen für die Automobilindustrie vorgesehen. Mit seiner die Fasermatten durchdringenden Matrix kann er jedoch nicht als Mehrschichtkörper angesprochen werden.

Aus der EP-A-0 013 089 ist es bekannt, unter Anwendung von Wärme und Druck aus einer mit Füllstoff versehenen Polypropylen-Bahn als Unterschicht, aus einer der gegenseitigen Verbindung dienenden dünneren Zwischenbahn aus füllstofffreiem Polypropylen und aus einer Textilbahn eine Verbundbahn herzustellen, aus der dann in einer Form unter erneuter Anwendung von Druck und Wärme Formteile hergestellt werden. Als Füllstoff sind u.a. Holzmehl oder ein Gewebe vorgesehen. Diese mehrschichtige Unterschicht enthält den Füllstoff nicht in einer beidseitig abgedeckten Kernschicht.

Aus der EP-A-0 319 589 ist ein zusammengesetztes Material bekannt, das eine thermoplastische Matrix, beispielsweise aus Polypropylen, aufweist, in die in gleichförmiger Verteilung Hanffasern und Holzfüllstoffe eingebettet sind. Dieses Material, das außerdem Ramie-, Flachs-, Jute- oder Sisalfasern enthalten kann, wird in Bahnen extrudiert und ist nicht mehrschichtig bzw. aus unterschiedlichen Schichten aufgebaut.

Mehrschichtige Fahrzeuginnenverkleidungsplatten der oben genannten Art werden z. B. als Dachhimmel, als Türinnenverkleidungen, Einsätze, Armaturenbretter und Deckplatten benutzt. Mehrschichtplatten verschiedener Konstruktionen sind seit langem bekannt. Solche dreidimensionalen Platten oder Körper haben eine große Oberfläche und enthalten herkömmlich eine Kernschicht oder eine Unterlage z. B. aus Polyurethan und eine oder mehrere Polyesterlagen. Diese Polyesterlagen werden normalerweise auf die großen Oberflächenseiten der Unterlage oder des Kerns aus Polyurethan kaschiert und zur Kaschierung wird ein Kleber benutzt, der ein Lösungsmittel enthält. Wegen der verschiedenen Schritte zur Herstellung der verschiedenen Lagen bzw. Schichten einschließlich der Aufbringung des Klebers auf den zutreffenden Oberflächen und schließlich wegen der Anbringung der Deckschichten ist die Herstellung herkömmlicher Mehrschichtplatten relativ kompliziert und kostpielig. Ferner enthalten die verschiedenen Materialien oft Materialkomponenten, die nicht zur Wiedergewinnung bzw. zum "Recycling" geeignet sind. Diese Materialien sind die durch die Verklebung in der Mehrschichtplatte schwierig zu zerkleinern und der Wiedergewinnung zuzuführen.

Es ist ebenfalls bekannt, natürliche Materialien in solchen Platten zu verwenden. Zum Beispiel ist es bekannt, die Unterlage oder eine Kernlage einer Platte aus Verbundwerkstoff herzustellen einschließlich natürlicher Füllstoffe, wie z. B. Sägemehl oder Holzspäne die durch einen Kleber oder ein Harzbindemittel miteinander verbunden sind. Die herkömmlichen Mehrschichtplatten sind relativ schwer oder haben eine große Dichte ohne die nötige Festigkeit für eine selbsttragende Konstruktion, wie z. B. Dachhimmel in einem Kraftwagen zu haben. Unterlagen aus Verbundwerkstoff, die z. B. Sägemehl enthalten, sind spröde, haben eine geringe Festigkeit und zerfallen leicht, während Unterlagen, die Holzspäne enthalten, leicht zersplittern können, wenn seitliche Kräfte oder Zerreißkräfte wirksam werden.

Im Hinblick auf die obigen Ausführungen stellt sich die Erfindung die folgende Aufgabe bzw. Aufgaben. Es soll eine Mehrschichtplatte insbesondere zur Verwendung als Innenverkleidungsplatte bereit gestellt werden, die insgesamt aus Materialien hergestellt ist, die in einfacher und unkomplizierter Weise entsorgt werden können, oder die sogar wiederverwertbar sind. Es soll auch ein Mehrschichtkörper geschaffen werden, dessen Kernlage einen erheblichen Anteil an natürlichen Fasern als Füllstoff enthält und zwar in einer Matrix oder Einbettungsmaterial aus thermoplastischem Material, wobei für die Kernlage preiswerte, umweltfreundliche, wiederverwendbare Materialien benutzt werden können. Die Mehrschichtplatte oder der Mehrschichtkörper soll auch die nötige Festigkeit und Steifheit haben, um z. B. selbsttragende Dachhimmel in einem Kraftfahrzeug daraus herstellen zu können. Außerdem sollen diese Mehrschichtkörper ihre mechanischen Eigenschaften auch bei hohen Temperaturen beibehalten. Ferner sollen diese Platten oder Körper schallschluckend sein, so daß sie zur Lärmdämpfung geeignet sind. Ferner werden eine gute und leichte Verformbarkeit und ein geringes Gewicht gefordert. Außerdem sollen diese Körper nachdem sie verformt worden sind, ihre dreidimensionale Formgebung beibehalten.

Diese Aufgabe wird erfindungsgemäß durch einen Mehrschichtkörper gelöst, wie er im Anspruch 1 beschrieben ist.

Zweckmäßige Ausgestaltungen und Weiterbildungen dieses erfindungsgemäßen Mehrschichtkörpers ergeben sich aus den Unteransprüchen.

Die Erfindung betrifft auch die Herstellung des Mehrschichtkörpers unter Anwendung der in den Verfahrensansprüchen aufgeführten Maßnahmen.

Natürliche Fasern, die als Füllstoff erfindungsgemäß geeignet sind, enthalten natürliche Pflanzenfasern, wie z.B. Stroh, Baumwollfasern, Flachsfasern, Hanffasern, Jutefasern, Sisalfasern und dergleichen sowie Kombinationen dieser natürlichen Pflanzenfasern. Diese natürlichen Pflanzenfasern sind relativ preiswert und werden aus natürlichen Quellen bezogen, die umweltfreundlich und erneuerbar sind. Zusätzlich zur Verwendung der natürlichen Fasern ist es erfindungsgemäß möglich Glasfasern zu benutzen und zwar zumindest für eine Teil des Füllstoffes. Der thermoplastische Kunststoff, der als Matrix oder Binder wirkt, ist vorzugsweise Polypropylen, das vorzugsweise ursprünglich ebenfalls in faserförmiger Form geliefert wird, wobei die Fasern zumindestens teilweise während des Kaschierens schmelzen.

Eine bevorzugte Ausführungsform der Erfindung betrifft eine Unterlage oder Trägerschicht mit einem Trägerkern oder eine Trägerkernschicht und zwei Trägerdeckschichten auf den betreffenden gegenüberliegenden Seiten der Trägerkernschicht. Die Trägerkernschicht wird aus natürlichem Faserfüllstoff innerhalb einer Matrix aus thermoplastischem Einbettungsmaterial wie oben beschrieben hergestellt. Die Deckschichten können ein Verbundmaterial sein, das ebenfalls einen Füllstoff aus natürlichen Fasern in einer thermoplastischen Matrix enthält oder enthalten kann. Es können aber auch andere Fasern in den Deckschichten vorhanden sein, wie z. B. Glasfasern oder speziell Polyesterfasern. In einer bevorzugten Ausführungsform enthalten die Deckschichten keinen natürlichen Faserfüllstoff sondern Glasfasern oder meist bevorzugt Polyesterfaserfüllmaterial, um Schutzschichten gegen Feuchtigkeit, gegen Einnebelung und gegen Gerüche zu schaffen. Ferner erleichtern die aus Kunststoff bestehenden äußeren Deckschichten die Anbringung von Hilfskomponenten z. B. mit Hilfe einer Ultraschallschweißung oder einer Reibungsschweißung oder eine Rotationsschweißung.

Vorzugsweise enthalten die Trägerdeckschichten bzw. die Deckschichten der Unterlagen einen größeren Anteil an thermoplastischem Matrix- oder Bindematerial als die Kernschicht, die vorzugsweise einen größeren Anteil an Füllstoffen enthält als die Deckschichten. In der Kernschicht der Unterlage liegt das Verhältnis zwischen thermoplastischem Material und natürlichen Fasern im Bereich von 30:70 bis 70:30 und vorzugsweise im Bereich von 30:70 bis 50:50. Für maximale Festigkeit der Unterlage wird das Verhältnis von nahezu 50:50 in der Kernschicht bevorzugt. Andererseits, in den Deckschichten kann das Verhältnis zwischen thermoplastischem Matrixmaterial oder Bindermaterial und den Faserfüllstoffen vorzugsweise etwa 70:30 betragen.

Erfindungsgemäß kann die Mehrschichtplatte eine dekorative Oberflächenschicht und eine Zwischenschicht enthalten. Die Zwischenschicht kann z. B. eine Schaumstoffpolsterung sein. Die dekorative Deckschicht und die Polsterzwischenschicht werden zusammen mit der Trägerschicht kaschiert und verformt. Die Zwischenlage kann ein weiches elastisches Material sein wie z. B. ein plastischer Schaumstoff, der recyclebar ist. Die dekorative Deckschicht kann ähnlich aus einem recyclebarem plastischem Material sein, wie z. B. ein gewebter Stoff, ein Vliesmaterial, oder eine plastische Folie oder Film.

Die Mehrschichtplatte wird durch kaschieren der verschiedenen Schichten unter Anwendung von Druck und Wärme hergestellt. Zunächst werden die Schichtmaterialien hergestellt, indem die ausgewählten natürlichen Fasern, Glasfasern oder Polyesterfasern mit den thermoplastischen Materialien gemischt werden. Die thermoplastischen Materialien werden vorzugsweise ebenfalls als Fasermaterial benutzt. Die Fasermaterialien sind vorzugsweise miteinander vernadelt. Danach werden die Materiallagen auf die Trägerschicht gestapelt, um ein Sandwich zu bilden, das dann in einer heißen Kaschierpresse verpreßt wird und zwar bei Temperaturen, die ausreichen um das thermoplastische Material zumindest teilweise zu schmelzen, um die Matrix zu bilden. Vorzugsweise werden die einzelnen Schichten für ein Mehrschichtsandwich "vorkaschiert", z. B. durch Vernadeln oder durch teiweises Wärmekaschieren ehe das Sandwich in die heiße Presse gelegt wird. Damit ist es möglich ein Mehrschichtenmaterial ohne Probleme in die heiße Presse einzulegen.

In der heißen Presse dient das thermoplastische Fasermaterial, das zumindest teilweise geschmolzen wird, als heißer Schmelzkleber, der die natürlichen Fasern innerhalb der Kernschicht und auch die benachbarten Lagen bzw. Schichten miteinander verbindet. Es ist ferner möglich, eine zusätzliche Kleberschicht oder Kleberfilm zu verwenden, ja nach der Anordnung der verschiedenen Materialschichten in einem bestimmten kaschierten Körper. Durch die Anwendung von Druck und Wärme in dem Kaschierverfahren entsteht ein einstückiger, laminierter Trägerkörper bzw. Unterlage.

Je nach der bestimmten Verwendung kann die dekorative Deckschicht und die Zwischenlage, wie z. B. eine Polsterschicht zumindest auf einer Seite der Unterlage aufgebracht werden. Die Kaschierung der dekorativen Deckschicht und der Zwischenschicht kann gleichzeitig mit der Wärmekaschierung und dem Pressen der Unterlage durchgeführt werden. Dieser Schritt kann aber auch als separater Schritt später ausgeführt werden. In einem solchen Falle wird die Zwischenschicht und die Deckschicht in einer Formpresse auf den Träger bzw. Unterlage laminiert bzw. kaschiert, wobei die Platte gleichzeitig verformt werden kann. Der endgültige Verformungs- und Kaschierschritt wird vorzugsweise bei einem geringeren Druck durchgeführt als anderweitig bzw. herkömmlich notwendig wäre und ohne die weitere Zufuhr von Wärme, da der Träger bzw. die Unterlage bereits erweicht und vorverformt worden sind und weil die Trägerschicht genügend Wärme vom Heißkaschieren aufgestaut hat.

Mit diesem relativ einfachen Verfahren wird eine einstückige, laminierte Mehrschichtplatte hergestellt, die eine Eigenstabilität hat, ohne daß separate Schritte für das Kaschieren der verschiedenen Lagen notwendig sind. In dieser Offenbarung wird der Ausdruck Mehrschichtplatte bzw. Mehrschichtkörper nicht nur zur Bezeichnung eines fertigen dreidimensional verformten Verkleidungsstückes benutzt sondern auch für die Bezeichnung eines Mehrschichtmaterials in flachem Zustand vor der Verformung und vor dem Beschneiden.

Die erfindungsgemäße Mehrschichtplatte erfüllt alle Anforderungen, die an solche Platten gestellt werden, einschließlich der Festigkeit, der Eigenstabilität, der Steifheit, der Schallisolation, des Wärmewiderstandes und dergleichen. Gleichzeitig sind die erfindungsgemäßen Platten wirtschaftlich und umweltfreundlich. Auch die Herstellung dieser Platten ist wie gesagt einfach, mit dem zusätzlichen Vorteil, daß das Material dieser Platten auf einfache weise recyclebar ist. Diese vorteilhaften Eigenschaften werden hauptsächlich dadurch erzielt, daß die Unterlage mehrere Schichten enthält, deren jede Schicht andere Eigenschaften hat, wobei die fertige Mehrschichtplatte die vorteilhaften Eigenschaften jeder der Einzelplatten hat. Die zentrale oder Kernschicht der Unterlage hat eins höhere Festigkeit und Eigenstabilität als die zwei Deckschichten dar Unterlage. Die Festigkeit der Unterlagen kann durch einen höheren Anteil an Faserfüllstoff in der Kernschicht bestimmt werden. Die Kernschicht hat selbst bereits eine wesentliche Festigkeit und Eigenstabilität sobald die Kernschicht vorverpreßt bzw. vorverdichtet worden ist unter der Einwirkung von Wärme und Druck. Die Festigkeit und Steifheit der Mehrschichtplatte wird auf den endgültigen erwünschten Wert durch die nachfolgende dreidimensionale Verformung und durch die endgültige Abkühlung und Aushärtung erhöht.

Die Erfindung wird nun unter Bezugnahme auf die beigefügten Zeichnungen beispielsweise beschrieben.
Fig. 1 zeigt eine vergrößerte, schematische Darstellung eines Querschnittes durch eine Mehrschichtplatte nach der Erfindung und
Fig. 2 zeigt eine Ansicht ähnlich wie Figur 1, aber illustriert eine andere Ausführungsform einer erfindungsgemäßen Platte.

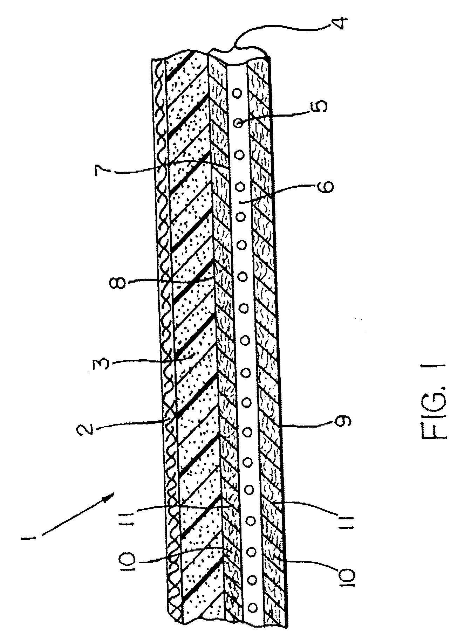

Figur 1 zeigt eine erfindungsgemäße Mehrschichtplatte 1, die als Ausgangsmaterial für die Herstellung verschiedener fertiger Verkleidungseinsätze bzw. Füllwände dient. Die Platte 1 enthält eine Unterlage 4 und eine Zwischenlage 3 sowie eine dekorative Außendeckschicht 2, die der Reihe nach auf der Oberfläche der Unterlage 4 aufgebracht werden. Die dekorative Außenschicht 2 und die Zwischenschicht 3 werden z. B. auf der Seite der Unterlage 4 angebracht, die in das Innere eines Personenkraftwagens gerichtet ist. Die dekorative Außenschicht 2 kann aus jedem leicht recyclebarem Material z. B. ein Gewebe synthetischer Fasern hergestellt sein. Die Zwischenschicht 3 zwischen der Deckschicht 2 und der Unterlage 4 ist vorzugsweise ein weicher elastischer Kunststoff oder dergleichen. In der dargestellten Ausführungsform enthält die Unterlage 4 drei Schichten, die miteinander kaschiert sind. Es handelt sich um die Kernschicht 7 mit einer inneren Deckschicht 8 auf einer Seite der Kernschicht 7 und mit einer äußeren Deckschicht 9 auf der anderen Seite der Kernschicht 7. Die innere Deckschicht 8 ist auf der Seite der Kernschicht 7 angeordnet, die dem Inneren des Fahrzeuges zugewandt ist. Die äußere Deckschicht 9 ist auf der Seite der Kernschicht angeordnet, die im Fahrzeug nach außen gerichtet ist.

Die Kernschicht 7 der Unterlage 4 enthält einen Faserfüllstoff 5, der in einem thermoplastischem Matrixmaterial 6 eingebettet ist. Jede der Deckschichten 8 und 9 der Unterlage enthalten entsprechende Faserfüllermaterialien 11 ebenfalls in einem thermoplastischem Matrixmaterial 10 eingebettet. Das Faserfüllermaterial 5 in der Kernschicht 7 der Unterlage 4 ist eine natürliche Faser, kann aber Glasfasern enthalten.

Das thermoplastische Material 6 der Kernschicht 7 und das thermoplastische Material 10 der beiden Deckschichten 8 und 9 ist vorzugszweise Polypropylen, das vorzugsweise ebenfalls als Fasermaterial benutzt wird. Dieses Fasermaterial schmilzt zumindest teilweise, um das Einbettungsmaterial bzw. die Matrix zu formen und als Kleber für die Fasern des Füllstoffes 5 der Kernschicht 7 und für die Fasern des Füllmaterials 11 der Deckschichten 8 und 9 zu wirken. Die Einbettung wird dadurch erreicht, daß die verschiedenen Fasern vernadelt werden und daß dann die Heißverpressung des Faserfüllmaterials mit dem thermoplastischen Matrixmaterial durchgeführt wird.

Auf diese Weise dient das Polypropylen Matrixmaterial 6 und 10 sowohl als Bindemittel für das Faserfüllmaterial 5 und 11 innerhalb der Schichten 7, 8 und 9 und auch als Heißschmelzkleber zwischen den betreffenden benachbarten Lagen 7 und 8 einerseits sowie 7 und 9 andererseits, um die Dreischichtunterlage 4 zu bilden.

Wegen des Füllermaterials 5 einschließlich der natürlichen Fasern und Glasfasern, falls erwünscht, läßt sich die Kernschicht 7 leicht verformen. Trotzdem ist die Kernschicht in der Lage, hohe Temperaturen und den kontrollierten Druck des Kaschierverfahrens auszuhalten. Dementsprechend fällt die Kernschicht nicht zusammen sondern wird anstatt nur etwas zusammengedrückt bzw. verdichtet und verformt, um die gewünschte, bestimmte Dicke zu erhalten, die wiederum die Steifheit sicherstellt sowie andere Eigenschaften, die für die bestimmte Fertigplatte erwünscht sind.

In diesem Zusammenhang ist zu erwähnen, daß es wichtig ist, daß der Füllstoff relativ leicht ist, also eine geringe Dichte hat, und daß die Fasern gegenüber den physikalischen oder mechanischen Änderungen während des Kaschierens gewachsen sind, insbesondere dem Schmelzen des thermoplastischen Materials bei der Kaschiertemperatur. Die oben erwähnten natürlichen Fasern haben diese Eigenschaften, wenn die Fasern im wesentlichen von der atmosphärischen Luft während des Heizens und Verpressens abgeschlossen sind, so daß diese Fasern zwar durchgehend erhitzt werden aber bei den relativ hohen Temperaturen trotzdem nicht brennen. Diese Bedingung wird erfindungsgemäß dadurch erfüllt, daß das thermoplastische Matrixmaterial 6 zumindest teilweise die Fasern 5 einkapselt, und weil die Deckschichten 8 und 9 im wesentlichen luftundurchlässig sind. Speziell, wenn die drei Schichten der Unterlage 4 in einer heizbaren bzw. beheizten Presse kaschiert werden, schmilzt das thermoplastische Material 10 der Schichten 8 und 9 zuerst und erst danach wird Wärme der Kernschicht 7 zugeführt, wo dann das thermoplastische Material 6 schmilzt.

Da das Füllmaterial 5 der Kernschicht 7 während des Kaschierens weder schmilzt noch brennt, bleibt das Füllermaterial 5 als Fasermaterial bestehen und ist als solches noch in der fertigen Mehrschichtplatte vorhanden. Als Ergebnis enthält die Kernschicht 7 ein faserverstärktes Verbundmaterial mit verbesserter Festigkeit und Steifheit, das auch gegen seitliche Kräfte und Zerreißkräfte widerstandsfähig ist, im Vergleich zu herkömmlichen Materialien. Die natürlichen Fasern 5 der Kernschicht 7 bleiben im wesentlichen ungestört, wenn die Mehrschichtplatte einem Stoß oder einer seitlichen Belastung ausgesetzt ist, selbst wenn diese Belastung die Zerreißkraft übersteigt, so daß die Kernschicht zwar platzt aber nicht zersplittert und damit auch nicht bricht oder zerfällt.

Die Kernschicht 7 mit Ihrem Füllmaterial 5 aus natürlichen Fasern und Glasfasern, die in thermoplastischem Polypropylen 6 eingebettet sind, ist mit den zwei Deckschichten 8 und 9 kaschiert. Jede der Deckschichten enthält Glasfasern 11, ebenfalls in thermoplastischem Polypropylen 10 eingebettet, um eine relativ dünne, flache Unterlage 4 zu schaffen, die eine große Oberfläche hat und die die nötige Festigkeit und Eigenstabilität besitzt. Zusätzlich ist diese Platte dazu geeignet, dreidimensional verformt zu werden und zwar gleichzeitig während der ursprünglichen Herstellung der Platte oder in einem nachfolgenden Schritt. Wie oben schon beschrieben kann die Zwischenschicht 3 und die dekorative Deckschicht 2 auf die Unterlage 4 aufgebracht werden, und zwar während der dreidimensionalen Verformung oder in einem separaten Kaschierschritt.

Die Gesamtdicke der Mehrschichtplatte 1 und der einzelnen Schichten 2, 3, 7, 8 und 9 kann unter Berücksichtigung der speziellen Verwendung der Platte ausgewählt werden. Selbst für große, flächige Komponenten, wie z. B. einen Dachhimmel, kann eine ausreichende Festigkeit und Eigenstabilität erzielt werden, wenn die Mehrschichtplatte eine Gesamtdicke im Bereich von weniger als 5mm bis etwas über 5mm hat.

Eine weitere bevorzugte Ausführungsform der Erfindung soll nun ebenfalls unter Bezugnahme auf Figur 1 beschrieben werden. Diese zweite Ausführungsform entspricht im wesentlichen der Ausführungsform, wie sie oben beschrieben worden ist, mit Ausnahme der Materialzusammenstellung in den Deckschichten 8 und 9, die ein wenig verschieden ist. Es ist insbesondere vorteilhaft, zumindestens eine der Deckschichten 8 und 9 aus Polyesterfasern 11 herzustellen, die in Polypropylen 10 eingebettet sind. Der proportionale Anteil an Polypropylen zu Polyester ist vorzugsweise 70:30. Vorzugsweise werden die Polyesterfasern in den Deckschichten 8 und 9 nur teilweise während des Kaschierens geschmolzen, so daß ein faserverstärktes Verbundmaterial erzielt wird, das eine weiter verbesserte Festigkeit und Formstabilität in der fertigen Mehrschichtplatte ergibt.

Ferner bilden die Deckschichten 8 und 9 aus Polyesterfasern in einer Polypropylen Matrix eine luftdichte und feuchtigkeitsdichte Sperrschicht auf der fertigen Unterlage 4. Die Schicht 9 bildet eine Feuchtigkeitssperre, die die Unterlage 4 gegen das Eindringen von Feuchtigkeit von außen in den Kern 7 schützt. Damit kann keine Feuchtigkeit die natürlichen Fasern 5 beschädigen. Ohne eine solche Feuchtigkeitssperrschicht, könnte Feuchtigkeit in die Kernschicht 7 eindringen, wobei die natürlichen Fasern faulen könnten. Ferner bildet die Deckschicht 8 eine Sperrschicht gegen das Ausdringen bzw. Ausnebeln organischer Gerüche von den natürlichen Fasern 5. Damit werden unangenehme Gerüche für die Insassen im Fahrzeug selbst vermieden. Falls jedoch eine dekorative Deckschicht, wie z. B. eine plastische Folie und eine Zwischenschicht 3, wie z. B. eine weiche Schaumstoffschicht, auf der ins Innere des Fahrzeugs gerichteten Oberfläche der Unterlage 4 aufgetragen werden, so ist es nicht notwendig, daß die innere Deckschicht 8 eine Geruchssperre bilden muß. In diesem Falle übernehmen die Deckschicht 2 und die Zwischenlage 3 eine ausreichende Sperre gegen das Ausdringen von Gerüchen.

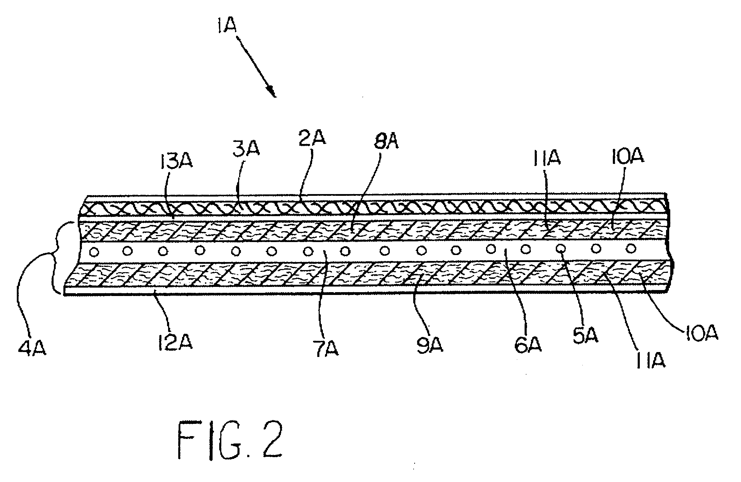

Figur 2 zeigt eine weitere Ausführungsform einer erfindungsgemäßen Mehrschichtplatte 1A. Die meisten Komponenten der Mehrschichtplatte 1A entsprechen den Komponenten der einen oder anderen Ausführungsform, die oben beschrieben worden sind. Deshalb sind die Komponenten in Figur 2 mit denselben Bezugszeichen versehen worden, jedoch mit dem Zusatz des Buchstabens "A". Wie in den oben beschriebenen Ausführungsformen gezeigt, enthält die Mehrschichtplatte 1A eine Unterlage 4A, die ihrerseits drei Schichten enthält, nämlich die Kernschicht 7A, eine innere Deckschicht 8A und eine äußere Deckschicht 9A. Diese drei Schichten werden durch Wärme zusammenkaschiert, um eine einstückige, integrale Unterlage 4A zu schaffen.

Die entsprechende Zusammensetzung der Kernschicht 7A und der beiden Deckschichten 8A und 9A kann ähnlich der Zusammensetzung sein, die oben mit Bezug auf Figur 1 beschrieben worden ist. Entsprechend können die Deckschichten 8A und 9A Naturfasern oder Glasfasern oder Polyesterfasern 11A enthalten, die in einer Propylen thermoplastischen Matrix 10A eingebettet sind. Die Kernschicht 7A enthält natürliche Fasern 5A, die z. B. in thermoplastischem Polypropylen 6A eingebettet sind.

Die Beispielsausführung der Mehrschichtplatte 1A gemäß Figur 2 unterscheidet sich von der Mehrschichtplatte 1 der Figur 1 dadurch, daß auf der Platte 1A eine Deckfolie 12A aufgebracht ist und zwar auf der Oberfläche der nach außen gerichteten Deckschicht 9A der Unterlage 4A. Die Deckfolie 12A kann eine einfache Papierfolie oder ein Papiervliesmaterial oder jede andere Trennschicht sein. Es ist Zweck der Trennschicht sicherzustellen, daß die Unterlage 4A nicht haftet, sondern leicht von der Heizplatte bzw. der Kontaktfläche der beheizten Presse entfernt werden kann, nachdem die Heißkaschierung beendet ist.

Ferner enthält die Mehrschichtplatte 1A der Figur 2 ein haftendes Vliesmaterial 13A, das zwischen der inneren Deckschicht 8A der Unterlage 4A und dem weichen plastischem Schaummaterial der Zwischenschicht 3 angeordnet ist. Für bestimmte Materialkombinationen bzw. Temperatur- und Druckverhältnisse beim Kaschieren, könnte die Haftung zwischen der Unterlage 4A und einer dekorativen Deckschicht unzureichend sein. In einem solchen Falle bietet eine haftende Vliesschicht 13A die nötige Haftung oder Bindung zwischen der Schaumzwischenlage 3A und der Unterlage 4A. Die dekorative Oberflächenschicht 2A wird auf der sichtbaren Oberfläche der Schaumstoffzwischenlage 3A aufkaschiert.

Das Ausgangsmaterial für die Schichten der Unterlagen 4, 4A nämlich die Kernschicht 7, 7A, die innere Deckschicht 8, 8A und die äußere Deckschicht 9, 9A ist entweder eine fortlaufende Warenbahn oder bereits zugeschnittene Stücke eines vernadelten Fasermaterials. Das vernadelte Fasermaterial enthält z. B. natürliche Fasern, wie zum Beispiel Flaxfasern, die mit Propylenfasern vernadelt sind oder Glasfasern, die mit Propylenfasern vernadelt sind. Auch Polyesterfasern, die mit Propylenfasern vernadelt sind, werden für die vorliegenden Zwecke benutzt.

Die fortlaufende Warenbahn oder die vorgeschnittenen Stücke des Fasermaterials werden in der richtigen Reihenfolge aufgestapelt und in die beheizte Kaschierpresse gelegt. Es wird bevorzugt, daß die einzelnen Schichten der Unterlage 4, 4A vorkaschiert werden. Dies kann durch Vernadeln oder durch eine Hitzekaschierung durchgeführt werden, um ein mehrschichtiges Unterlagenmaterial herzustellen, das dann in die Heiz- und/oder Kaschierpresse gelegt wird. Nachdem die Schichten der Unterlage in die Presse eingelegt worden sind, wird die Presse geschlossen, um die Schichten zu heizen und zu pressen und damit wird die laminierte bzw. kaschierte Unterlage hergestellt. Danach wird die laminierte Unterlage 4 oder 4A vorzugszweise aus der heißen Kaschierpresse entfernt und es wird dann die Schaumstoffzwischenlage 3 oder 3A und die dekorative Oberflächenschicht 2 oder 2A in der Formpresse in der richtigen Reihenfolge auf die Unterlage 4 oder 4A gelegt. Die Formpresse wird geschlossen, um die Unterlage 4 oder 4A zu verformen und gleichzeitig die dekorative Oberschicht 2 oder 2A und die Zwischenschicht 3 oder 3A auf die Unterlage 4 oder 4A zu kaschieren. Die Zwischenschicht 3 oder 3A und die dekorative Außenschicht 2 oder 2A können in einem separaten Vorgang miteinander kaschiert worden sein.

Normalerweise genügt die in der Unterlage 4 oder 4A gespeicherte Wärmeenergie, um die Zwischenlage 3 oder 3A auf die innere Außenschicht 8 oder 8A zu kaschieren und damit eine hinreichende Bindung zwischen der Unterlage 4 oder 4A und der Zwischenschicht 3 oder 3A zu erzielen. Auf diese Weise kann die Unterlage 4 oder 4A als Wärmeträger für die anschließende Verformung und das anschließende Kaschieren in der Formpresse dienen. Ferner, da die Kernschicht 7 oder 7A und die Deckschichten 8 oder 8A sowie 9 oder 9A der Unterlage 4 oder 4A unter Wärmeeinwirkung vorgepreßt und vorkaschiert worden sind, braucht der in der nachfolgenden Verformung angewendete Verformungsdruck nicht hoch zu sein. Zum Beispiel, die Heizpresse und/oder Kaschierpresse übt einen Kaschierdruck von etwa 250 bis 500g/cm² aus, während die Verformungspresse einen Verformungsdruck von etwa 500 bis 1000g/cm² aufbringt. Da wegen der Vorheizung und/oder Vorkaschierung der Verformungsdruck kleiner sein kann im Vergleich zum Verformungsdruck, der notwendig sein würde, wenn diese Vorbereitungsschritte nicht durchgeführt werden, kann die Verformungspresse leichter konstruiert sein und wird damit auch kostengünstiger. Ein weiterer Vorteil des reduzierten Verformungsdruckes beruht auf der Tatsache, daß damit Beschädigungen der dekorativen Außenschicht 2, 2A vermieden werden. Auch wird die Schaumstoffzwischenschicht 3, 3A dann nicht so weit zusammengedrückt, daß sie ihre Eigenschaft als Schaumstoff verliert.

## Patentansprüche

1. Kaschierter Mehrschichtkörper (1), insbesondere für ein mehrlagiges Innenverkleidungsteil für Kraftfahrzeuge,
a) mit einer Unterlage (4) und einer dekorativen Außenschicht (2),
b) wobei die Unterlage (4) aus einer Kernschicht (7) und beidseitig ankaschierten Deckschichten (8, 9) besteht,
c) wobei ferner die Kernschicht (7) Naturfasern als Füllstoff und
wenigstens eine der beiden Deckschichten (8, 9) Polyesterfasern als Füllstoff enthalten und
d) wobei jeweils Polypropylen als thermoplastisches Bindematerial sowohl in der Kernschicht (7) als auch in beiden Deckschichten (8, 9) vorgesehen ist und
e) wobei der prozentuale Anteil von Polypropylen als thermoplastisches Bindematerial relativ zum Füllmaterial in den beiden Deckschichten (8, 9) höher ist als der prozentuale Anteil des Polypropylens zum Füllmaterial in der Kernschicht (7).

2. Mehrschichtkörper nach Anspruch 1, dadurch gekennzeichnet, daß der prozentuale Anteil von thermoplastischem Bindematerial relativ zum Füllmaterial in der Kernschicht (7) im Bereich von 30:70 bis 70:30 liegt.

3. Mehrschichtkörper nach Anspruch 3, dadurch gekennzeichnet, daß das prozentuale Verhältnis zwischen Bindematerial relativ zum Füllmaterial in der Kernschicht (7) im Bereich von 30:70 bis 50:50 liegt.

4. Mehrschichtkörper nach Anspruch 3, dadurch gekennzeichnet, daß das prozentuale Verhältnis zwischen Bindematerial relativ zum Füllmaterial in jeder der beiden Deckschichten etwa 70:30 ist.

5. Mehrschichtkörper nach mindestens einem der vorhergehenden Ansprüche, dadurch gekennzeichnet, daß als Naturfasern Stroh, Baumwolle, Flachs, Sisal, Jute, Hanf und/oder Kombinationen dieser Fasern vorgesehen sind.

6. Mehrschichtkörper nach mindestens einem der vorhergehenden Ansprüche, dadurch gekennzeichnet, daß das Füllmaterial zusätzlich Glasfasern enthält.

7. Mehrschichtkörper nach mindestens einem der vorhergehenden Ansprüche, dadurch gekennzeichnet, daß das Propylen als Polypropylenfasern vorliegt.

8. Mehrschichtkörper nach mindestens einem der vorhergehenden Ansprüche, dadurch gekennzeichnet, daß die Kernschicht (7) und die Deckschichten (8, 9) eine Tafel ist, die aus bandförmigem, vernadeltem Fasermaterial geschnitten ist, und daß die Schichten unter Wärme und Druck zur Bildung der Unterlage (4) zusammenkaschiert sind.

9. Mehrschichtkörper nach mindestens einem der vorhergehenden Ansprüche, dadurch gekennzeichnet, daß eine Zwischenschicht (3) zwischen der Unterlage (4) und der dekorativen Außenschicht (2) angeordnet ist.

10. Mehrschichtkörper nach mindestens einem der vorhergehenden Ansprüche, dadurch gekennzeichnet, daß die Zwischenschicht (3) eine weiche, elastische, synthetische Schaumstofflage enthält.

11. Mehrschichtkörper nach mindestens einem der vorhergehenden Ansprüche, dadurch gekennzeichnet, daß die dekorative Außenschicht (2) eine Textilschicht ist.

12. Mehrschichtkörper nach mindestens einem der vorhergehenden Ansprüche, dadurch gekennzeichnet, daß mit Hilfe der Polyesterfasern in den Deckschichten (8 und 9) ein faserverstärktes Verbundmaterial gebildet ist.

13. Mehrschichtkörper nach mindestens einem der vorhergehenden Ansprüche, dadurch gekennzeichnet, daß die Polyesterfasern in den Deckschichten (8 und 9) teilweise geschmolzen sind.

14. Verfahren zum Herstellen eines Mehrschichtkörpers nach Anspruch 1, gekennzeichnet durch eine Temperatursteuerung bei der Herstellung und der damit verbundenen Wärmebehandlung derart, daß die Polyesterfasern beim Kaschieren nur teilweise schmelzen.

15. Verfahren nach Anspruch 14, gekennzeichnet durch die folgenden Schritte:
a) Einbringen einer Kernschicht (7), die bereits zwischen einer ersten Deckschicht und einer zweiten Deckschicht angeordnet ist, zwischen die Druckplatten einer Heißkaschierpresse;
b) Erhitzen der Pressplatten auf eine Temperatur, die etwa der Schmelztemperatur des thermoplastischen Bindematerials entspricht;
c) Schließen der Heißkaschierpresse und Aufbringen des Kaschierdruckes auf die Pressplatten, so daß die Kernschicht und die erste und zweite Deckschicht erhitzt werden und so daß das thermoplastische Bindematerial zumindest teilweise schmutzt und dadurch die Naturfasern in jeder Schicht miteinander verbunden werden und daß zumindest die Kernschicht teilweise vorverdichtet wird, wobei das Heißkaschieren der Deckschichten mit der Kernschicht die Unterlage bildet,
d) Einbringen der Untelage und der dekorativen Außenschicht in eine Verformungspresse, während die Unterlage zumindest noch einen Teil der Wärme enthält, die während des Verfahrensschrittes c) aufgenommen worden ist, und
e) Schließen der Verformungspresse und Aufbringen eines Verformungsdruckes, wodurch die dekorative Außenschicht auf die Unterlage heißkaschiert wird und gleichzeitig die Unterlage und die dekorative Deckschicht eine dreidimensionale Formgebung erhalten, wobei der Formdruck reduziert ist im Vergleich zu dem Formdruck, der nötig wäre ohne die Aufbringung des Laminierdruckes und des Vorverdichtungsdruckes zumindest auf die Kernschicht gemäß Verfahrensschritt c).

16. Verfahren nach Anspruch 15, dadurch gekennzeichnet, daß zunächst eine Kernschicht und eine erste und zweite Deckschicht von einem bandförmigen Material vernadelter Fasern geschnitten werden, um die Kernschicht und die erste und zweite Deckschicht vorzubereiten.

17. Verfahren nach Anspruch 16, dadurch gekennzeichnet, daß die erste Deckschicht, die Kernschicht und die zweite Deckschicht zur Verwendung gemäß Verfahrensschritt a) jeweils vorkaschiertes Mehrschichtmaterial enthalten.

## Claims

1. Laminated multilayer body (1), especially for a multilayer inner lining part for motor vehicles,
a) with a substrate (4) and a decorative outer layer (2),
b) wherein the substrate (4) consists of a core layer (7) and laminated cover layers (8, 9) at both sides,
c) wherein moreover the core layer (7) comprises natural fibres as filler and at least one of the two cover layers (8, 9) comprises polyester fibres as filler and
d) wherein in each case polypropylene is provided as a thermoplastic binder not only in the core layer (7), but also in the two cover layers (8, 9) and
e) wherein the percentage proportion of polypropylene as thermoplastic binder relative to the filler in the two cover layers (8, 9) is higher than the percentage proportion of the polypropylene relative to the filler in the core layer (7).

2. Multilayer body according to claim 1, characterised in that the percentage proportion of thermoplastic binder relative to the filler in the core layer (7) lies in the region of 30:70 to 70:30.

3. Multilayer body according to claim 3, characterised in that the percentage ratio between binder relative to the filler in the core layer (7) lies in the region of 30:70 to 50:50.

4. Multilayer body according to claim 3, characterised in that the percentage ratio between binder relative to the filler in each of the two cover layers is about 70:30.

5. Multilayer body according to at least one of the preceding claims, characterised in that straw, cotton, flax, sisal, jute, hemp and/or combinations of these fibres are provided as natural fibres.

6. Multilayer body according to at least one of the preceding claims, characterised in that the filler additionally contains glass fibres.

7. Multilayer body according to at least one of the preceding claims, characterised in that the propylene is present as polypropylene fibres.

8. Multilayer body according to at least one of the preceding claims, characterised in that the core layer (7) and the cover layers (8, 9) are a panel which is cut from strip-shaped needled fibre material and that the layers are laminated together under heat and pressure for formation of the substrate (4).

9. Multilayer body according to at least one of the preceding claims, characterised in that an intermediate layer (3) is arranged between the substrate (4) and the decorative outer layer (2).

10. Multilayer body according to at least one of the preceding claims, characterised in that the intermediate layer (3) contains a soft, elastic, synthetic foam material layer.

11. Multilayer body according to at least one of the preceding claims, characterised in that the decorative outer layer (2) is a textile layer.

12. Multilayer body according to at least one of the preceding claims, characterised in that a fibre-reinforced compound material is formed with the aid of the polyester fibres in the cover layers (8 and 9).

13. Multilayer body according to at least one of the preceding claims, characterised in that the polyester fibres are partially melted in the cover layers (8 and 9).

14. Method for the manufacture of a multilayer body according to claim 1, characterised by a temperature control during manufacture and the thermal treatment connected therewith in such a manner that the polyester fibres are only partially melted during the laminating.

15. Method according to claim 14, characterised by the following steps:
a) introduction of a core layer (7), which is already arranged between a first cover layer and a second cover layer, between the pressure plates of a hot-laminating press;
b) heating of the press plates to a temperature which approximately corresponds to the melt temperature of the thermoplastic binder;
c) closing of the hot-laminating press and application of the laminating pressure to the press plates so that the core layer and the first and second cover layer are heated and so that the thermoplastic binder is at least partially melted and thereby the natural fibres in each layer are connected together and that at least the core layer is partly precompressed, wherein the hot-laminating of the cover layers with the core layer forms the substrate,
d) introduction of the substrate and the decorative outer layer into a shaping press, while the substrate still contains at least a part of the heat which had been taken up during method step c), and
e) closing the shaping press and application of a shaping pressure, whereby the decorative outer layer is hot-laminated onto the substrate and at the same time the substrate and the decorative cover layer receive a three-dimensional shaping, wherein the mould pressure is reduced by comparison with the mould pressure which would have been necessary without the application of the laminating pressure and the precompressing pressure at least on the core layer according to method step c).

16. Method according to claim 15, characterised in that initially a core layer and a first and second cover layer are cut from a strip-shaped material of needled fibres in order to prepare the core layer and the first and second cover layer.

17. Method according to claim 16, characterised in that the first cover layer, the core layer and the second cover layer each comprise pre-laminated multilayer material for the use according to method step a).

## Revendications

1. Corps multicouche laminé (1), notamment pour une partie de revêtement interne multicouche pour des véhicules automobiles,
a) avec un support (4) et une couche externe décorative (2),
b) où le support (4) est constitué d'une couche formant noyau (7) et de couches de recouvrement (8, 9) laminées sur les deux côtés de celle-ci,
c) où en outre, la couche formant noyau (7) comporte des fibres naturelles comme matière de remplissage et
au moins l'une des deux couches de recouvrement (8, 9) comporte des fibres de polyester comme matière de remplissage et
d) où respectivement du polypropylène est prévu comme matériau de liaison thermoplastique à la fois dans la couche formant noyau (7) et aussi dans les deux couches de recouvrement (8, 9) et
e) où la part en pour-cent de polypropylène comme matériau de liaison thermoplastique relativement au matériau de remplissage dans les deux couches de recouvrement (8, 9) est plus élevée que la part en pour-cent du polypropylène au matériau de remplissage dans la couche formant noyau (7).

2. Corps multicouche selon la revendication 1, caractérisé en ce que la part en pour-cent du matériau de liaison thermoplastique relativement au matériau de remplissage dans la couche formant noyau (7) se situe dans la plage de 30:70 à 70:30.

3. Corps multicouche selon la revendication 3, caractérisé en ce que le rapport en pour-cent entre le matériau de liaison relativement au matériau de remplissage dans la couche formant noyau (7) se situe dans la plage de 30:70 à 50:50.

4. Corps multicouche selon la revendication 3, caractérisé en ce que le rapport en pour-cent entre le matériau de liaison relativement au matériau de remplissage dans chacune des deux couches de recouvrement est environ de 70:30.

5. Corps multicouche selon au moins l'une des revendications précédentes, caractérisé en ce que sont prévues comme fibres naturelles de la paille, du coton, du lin, du sisal, du jute, du chanvre et/ou des combinaisons de ces fibres.

6. Corps multicouche selon au moins l'une des revendications précédentes, caractérisé en ce que le matériau de remplissage contient additionnellement des fibres de verre.

7. Corps multicouche selon au moins l'une des revendications précédentes, caractérisé en ce que le propylène se présente sous forme de fibres de polypropylène.

8. Corps multicouche selon au moins l'une des revendications précédentes, caractérisé en ce que la couche formant noyau (7) et les couches de recouvrement (8, 9) forment une plaque qui est découpée dans un matériau de fibres auguilletées en forme de ruban, et que les couches sont laminées ensembles sous l'effet de la chaleur et de la pression pour former le support (4).

9. Corps multicouche selon au moins l'une des revendications précédentes, caractérisé en ce qu'il est disposé une couche intermédiaire (3) entre le support (4) et la couche externe décorative (2).

10. Corps multicouché selon au moins l'une des revendications précédentes, caractérisé en ce que la couche intermédiaire (3) comporte une couche de mousse souple, élastique et synthétique.

11. Corps multicouche selon au moins l'une des revendications précédentes, caractérisé en ce que la couche externe décorative (2) est une couche textile.

12. Corps multicouche selon au moins l'une des revendications précédentes, caractérisé en ce qu'il est formé à l'aide des fibres polyester dans les couches de recouvrement (8 et 9) un matériau composite renforcé par des fibres.

13. Corps multicouche selon au moins l'une des revendications précédentes, caractérisé en ce que les fibres polyester dans les couches de recouvrement (8 et 9) sont partiellement fondues.

14. Procédé de fabrication d'un corps multicouche selon la revendication 1, caractérisé par une commande de la température lors de la fabrication et du traitement thermique lié à celle-ci de façon que les fibres polyester, lors du laminage, fondent seulement partiellement.

15. Procédé selon la revendication 14, caractérisé par les étapes suivantes :
a) insérer une couche formant noyau (7) qui est déjà disposée entre une première couche de recouvrement et une seconde couche de recouvrement, entre les plaques de pression d'une presse de laminage à chaud ;
b) chauffer les plaques de pression à une température qui correspond environ à la température de fusion du matériau de liaison thermoplastique ;
c) fermer la presse de laminage à chaud et appliquer la pression de laminage aux plaques de pression de telle sorte que la couche formant noyau et la première et seconde couche de recouvrement sont chauffées et que le matériau de liaison thermoplastique fond au moins partiellement et que de ce fait les fibres naturelles dans chaque couche sont reliées les unes aux autres, et qu'au moins la couche formant noyau est partiellement compactée préalablement, où le laminage à chaud des couches de recouvrement avec la couche formant noyau forme le support,
d) insérer le support et la couche externe décorative dans une presse de formage pendant que le support contient au moins encore une partie de la chaleur absorbée pendant l'étape de procédé c) et
e) fermer la presse de formage et appliquer une pression de formage, par quoi la couche externe décorative est laminée à chaud sur le support et simultanément le support et la couche de recouvrement décorative reçoivent une configuration tridimensionnelle, où la pression de formage est réduite en comparaison avec la pression de formage qui serait nécessaire sans appliquer la pression de laminage et la pression de compactage préalable au moins sur la couche formant noyau selon l'étape de procédé c).

16. Procédé selon la revendication 15, caractérisé en ce que sont découpées d'abord une couche formant noyau et une première et deuxième couche de recouvrement dans un matériau en forme de ruban de fibres aiguilletées pour préparer la couche formant noyau et la première et seconde couche de recouvrement.

17. Procédé selon la revendication 16, caractérisé en ce que la première couche de recouvrement, la couche formant noyau et la seconde couche de recouvrement, en vue de l'utilisation selon l'étape de procédé a), contiennent chacune du matériau multicouche laminé préalablement.
